# EUROPEAN PATENT SPECIFICATION

(11) **EP 2 945 219 B1**
(45) Date of publication and mention of the grant of the patent: **20.03.2019**
(21) Application number: 15166193.1
(22) Date of filing: 04.05.2015
(51) Int. Cl.: H01M 10/615, H01M 10/617, H01M 10/625, H01M 10/6571, H01M 10/6556, H01M 2/10, H01M 10/04, F28F 1/02, B60L 11/18

(54) **DEVICE FOR HEATING AND COOLING A BATTERY PACK**
VORRICHTUNG ZUM ERWÄRMEN UND KÜHLEN EINES BATTERIEPACKS
DISPOSITIF DE CHAUFFAGE ET DE REFROIDISSEMENT D'UN BLOC-BATTERIE

(30) Priority: 16.05.2014 DE 102014106954
(43) Date of publication of application: 18.11.2015
(73) Proprietor: Valeo Klimasysteme GmbH, 96476 Bad Rodach (DE)
(72) Inventor: Haussmann, Roland, 68169 Wiesloch (DE)
(74) Representative: Metz, Gaëlle

(56) References cited:
- EP-A1- 2 343 769
- EP-A1- 2 362 464
- EP-A1- 2 388 851
- US-A1- 2010 151 307
- US-A1- 2013 108 896

## Description

The invention relates to a device for heating and cooling a battery pack, in particular a vehicle drive battery pack comprising a plurality of battery cells.

On account of the environmental pollution which is caused by vehicles with pure internal combustion engines, the development of vehicle drives is increasingly heading in the direction of electric drives which at least partially replace the conventional internal combustion engines. The electric drives typically have a drive battery assembly by means of which the electric drive generates its power. In said electric drives, the drive battery assembly has at least one battery pack which is constructed from at least one battery module which comprises a plurality of battery cells. The battery packs or battery modules used are high-voltage batteries which can have voltages of from 130 to 360 V.

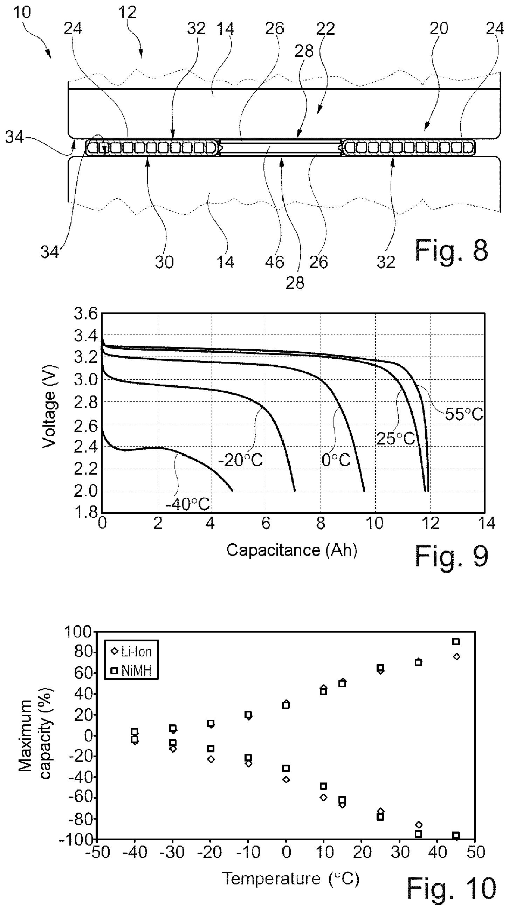

Since the batteries give off heat during charging and discharging, the batteries typically have to be cooled by means of cooling devices so that the batteries are kept in an optimum range of action. However, the batteries also have to be heated in the case of relatively cold ambient temperatures since the batteries may otherwise be damaged if they are subjected to heavy loading, for example, below 0°C. In order to avoid damage, the batteries are therefore driven such that they can provide only a partial power. As shown by the graph in Figure 9, the voltage and capacitance of the battery are considerably reduced in relation to relatively high temperatures. Figure 10 indicates the maximum permissible charging and discharging capacity at various temperatures for lithium-ion batteries and NiMH batteries. The maximum permissible charging and discharging capacity becomes smaller as temperatures fall, wherein, for example at temperatures of below 0°C in a normal traffic situation, a charging process or an acceleration process of the vehicle is not possible since less than 40% of the rated power is available.

The prior art therefore discloses fitting heating devices to the battery packs, which heating devices heat the battery pack in order to be able to provide the full power. However, since cooling of the battery cells is paramount, the cooling device is arranged in a location on the battery pack which has the best thermal contact area, so that the battery cells are cooled in an efficient and effective manner. In contrast, the heating devices are arranged in positions on the battery pack which exhibit relatively poor thermal contact and therefore a lower degree of efficiency. By way of example, the heating devices are fitted to the outer sides of the battery pack, as a result of which only the outer battery cells are heated however.

The document EP 2 388 851 A1 (BEH GMBH & CO KG) 23.11.2011 discloses a device for heating and cooling a battery pack having a heating element and a cooling element wherein the cooling element is pressed against the battery pack in a pretensioned manner by means of a pretensioning unit.

The document EP 2 343 769 A1 (VALEO KLIMASYSTEME GMBH)13.07.2011 discloses a device for heating and cooling a battery pack having a heating element and a cooling element wherein the cooling element and the heating element share a common heat transfer component. In this way the device can heat or cool the battery by way of the at least one common heat-transfer component, depending upon whether the electrical heating element or the coolant circuit is active.

The object of the invention is to provide a device which allows a battery pack to be both cooled and also heated in an efficient manner.

The object of the invention is achieved by a device according to claim 1.

The fundamental idea of the invention is to position the heating device such that efficient heating of the battery pack is possible. According to the invention, provision is made for the battery cells to have the same degree of thermal contact with the heating device as with the cooling device. This is achieved by the heating device being arranged either directly on that side of the battery pack against which the cooling device is also provided or by the heating device interacting with the corresponding contact side of the battery pack by means of the cooling device. Since the cooling elements are formed from a material which has a high heat transfer coefficient, it is ensured that the heat which is generated by the heating device is transferred to the battery pack by means of the cooling elements. In addition, the integrated design ensures that cooling and heating are standardised, since the heating function and the cooling function are integrated in the same device. This reduces the expenditure on assembly since only one device has to be coupled to the battery pack in order to provide the battery pack with a heating and cooling function. Furthermore, the robustness is increased on account of the integral design.

Owing to the pretensioning, better contact is made with the side of the battery pack which is intended to be cooled or heated, as a result of which better thermal contact is produced. The efficiency during heating and cooling is increased in this way.

The pretensioning unit can adjust the force with which the cooling element and/or the heating element are/is pressed against the battery pack.

In this case, the support is formed from a material which thermally decouples the pretensioning unit from the cooling element and/or heating element, so that it is ensured that the pretensioning unit is subjected to a lower level of thermal loading. Furthermore, the support can ensure that the pretension which is produced by the pretensioning unit is transmitted uniformly to the cooling element and/or the heating element.

A further aspect of the invention makes provision for the heating element, the cooling element and the support to form a preassembly unit. The outlay on assembly can be further reduced in this way since the heating element and the cooling element do not first have to be positioned on the support. The preassembly unit can be designed, in particular, such that the heating element is arranged between the cooling element and the support, wherein the support and the cooling element are coupled to one another in order to hold the interposed heating element in a secure manner. In this case, the support and the coupling element can be coupled, for example, by means of a clip connection.

According to a further aspect of the invention, two heating elements which are situated one above the other are provided, the said heating elements forming one unit, wherein an elastic material is provided between the two heating elements. The sandwich unit which is formed in such a way therefore has two opposite heating areas which can serve to heat, for example, two battery modules which are situated opposite one another by way of their sides which are to be heated or are to be cooled. A unit which is formed in such a way can also be called a heating laminate. The interposed elastic material may be an elastic foam material.

As an alternative, provision may also be made for the elastic material to be only loosely interposed, wherein a unit is not formed.

Furthermore, the heating element can be arranged between two cooling elements, in particular can be coupled to two cooling elements. The two cooling elements are, for example, arranged in each case to the side of the heating element. As an alternative, the two cooling elements and the heating element can also form a stack, so that the heating element interacts with two battery modules by means of the two cooling elements which are arranged on opposite sides.

According to the invention, the cooling element has a plurality of canals. This ensures that the cooling element can be operated with the refrigerant R744 since the plurality of canals ensure that the cooling element has the required burst pressure. The large number of canals and the associated intermediate walls form a large inner area within the cooling element, as a result of which a relatively high cooling effect can be achieved. In addition, the intermediate walls serve to transport heat from the associated heating element since the cooling element and the intermediate walls can be formed from a material which has a high degree of thermal conductivity, for example a metal.

According to the invention, provision is made for the cooling element to be an integral plate-like part which is traversed by the canals. This form guarantees that the two main areas of the plate-like cooling element are used for transferring heat to the battery pack and/or from the heating element, so that the relatively small secondary areas do not have a large share of the heat transfer. This increases the efficiency since thermal losses at the secondary areas are reduced.

The cooling element may be an extruded profile, and therefore the cooling element can be produced in a cost-effective manner.

In particular, the heating element and the cooling element have the same length and/or width. This once again increases the efficiency since it is ensured that the heating elements have the same thermal contact area as the cooling elements or utilise the entire area of the cooling elements.

According to one aspect of the invention, the heating element may be an electrical heating element. This provides a simple and cost-effective way of heating the electrical battery cells. The electrical heating elements can be formed, in particular, in such a way that the two connection poles lie on one side, as a result of which the outlay on cabling is reduced. This also makes it easier to assemble the heating and cooling device. The electrical heating element can further be a resistance heater which is surrounded by an electrical insulation material.

In order to further reduce the outlay on cabling, the heating device can comprise a cable harness to which the individual heating elements are connected. This reduces the costs since a standardised design is available. The heating device is therefore of modular construction.

The invention further relates to a vehicle drive battery assembly comprising a battery pack which has at least one battery module comprising a plurality of battery cells, and comprising a heating and cooling device of the above-described type.

According to a further aspect of the invention, the heating element is arranged laterally next to and between two cooling elements which are laterally spaced apart, on the same side of the battery module with which the cooling elements are also associated. This produces a particularly flat construction of the heating and cooling device since a heating element and a cooling element alternately make contact with the side of the battery module. It is further guaranteed that both the heating element and the cooling element are provided on the side of the battery module with which thermal contact is best possible.

Further advantages and properties of the invention are revealed in the following description and the drawings to which reference is made and in which:
- Figure 1 shows a schematic cross-sectional view through a vehicle drive battery assembly according to the invention in line with a first embodiment,
- Figure 2 shows a perspective view of a vehicle drive battery assembly according to the invention in line with a second embodiment,
- Figure 3 shows a plan view of the heating and cooling device according to the invention from Figure 2,
- Figure 4 is a schematic illustration of a vehicle drive battery assembly according to the invention in line with a third embodiment,
- Figure 5 shows a vertical cross-sectional view through a vehicle drive battery assembly according to the invention in line with a fourth embodiment,
- Figure 6 shows a schematic plan view of a vehicle drive battery assembly according to the invention in line with a fifth embodiment,
- Figure 7 shows a schematic cross-sectional view through a heating element,
- Figure 8 shows a schematic cross-sectional view through a vehicle drive battery assembly which is not according to the invention,
- Figure 9 shows voltage and charging curves of a vehicle drive battery at various temperatures, and
- Figure 10 shows the maximum permissible charging and discharging capacity of a battery at various temperatures.

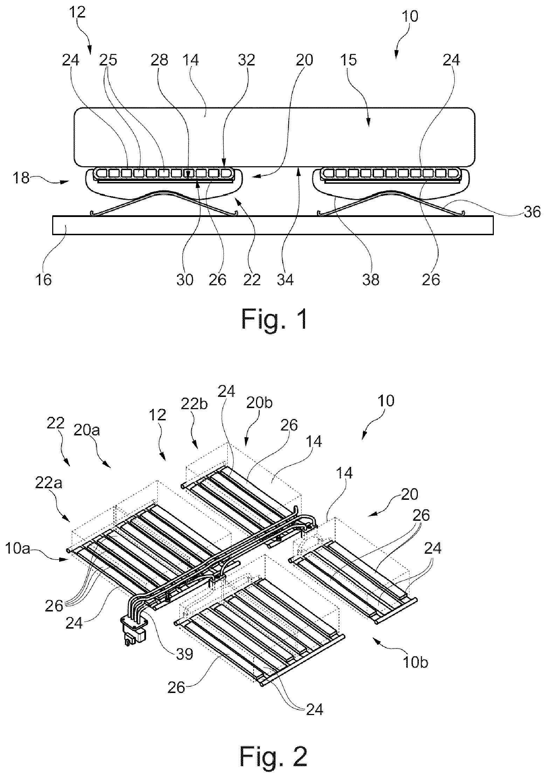

Figure 1 schematically shows a sectional illustration through a vehicle drive battery assembly 10 according to the invention which comprises a battery pack 12 which, in the shown embodiment, is formed from a battery module 14, which has a plurality of battery cells 15, and also an outer battery housing 16.

The battery cells 15 can be arranged in a so-called "jelly roll" design, wherein they extend over the width illustrated in Figure 1 and are arranged one behind the other.

The vehicle drive battery assembly 10 further has a heating and cooling device 18 which comprises a cooling device 20 and also a heating device 22.

In the shown embodiment, the cooling device 20 has two cooling elements 24 which are formed separately from one another and which are arranged laterally next to one another and each have a plurality of parallel canals 25. A cooling fluid flows through the canals 25 in order to carry away the heat generated by the batteries of the battery module 14. The cooling elements 24 are, in particular, of identical design.

In the shown embodiment, the heating device 22 likewise comprises two separate heating elements 26 which are arranged directly on the cooling elements 24. The heating elements 26 have a contact area 28 by way of which the heating elements 26 bear against a first outer area 30 of the cooling elements 22.

The cooling elements 22 further lie directly against a flat cooling area 34 of the battery module 14, more precisely immediately against the housing of the module, by way of a second outer area 32.

In the shown embodiment, the cooling elements 24 are pressed against the cooling area 34 of the battery module 14 since in each case one pretensioning unit 36 is provided for each cooling element 24. The pretensioning unit 36 is in the form of a spring element and is supported against the battery housing 16 by way of one end, as a result of which pretensioning against the cooling area 34 of the battery module 14 is produced.

In order to decouple the pretensioning unit 36 from the thermally active cooling element 22, a support 38 is provided between the pretensioning unit 36 and the cooling element 24, the said support typically being formed from a material which has a low heat transfer coefficient.

The support 38 further serves to transfer the tensioning force which is generated by the pretensioning unit 36 uniformly to the cooling element 24, and so that the cooling element 24 acts on the cooling area 34 in a homogeneous manner.

The heating elements 26 are further arranged between the support 38 and the cooling element 24, so that the heating elements 26 also act uniformly on the cooling element 24, in particular the first outer area 30, by way of the support 38 and the pretensioning unit 36.

The pretensioning ensures that both the heating elements 26 and also the cooling elements 24 are in good thermal contact with the battery cells of the battery module 14 and that efficient heating and, respectively, cooling of the battery cells are possible.

The reason for this is primarily because the cooling elements 24 are in the form of plate-like elements which are formed from a material which has a high heat transfer coefficient, for example a metal. This ensures that the heat which is generated by the heating elements 26 is transferred to the cooling area 34 of the battery module 14 by means of the structure of the cooling elements 24, as a result of which the battery module 14 can be heated by means of the cooling area 34 if required.

In this case, the intermediate walls of the many canals 25, which are formed from the same material as the cooling elements 24, serve as the heat transfer structure since the cooling elements 24 may be, in particular, extruded profiles.

The cooling element 24, the heating element 26 and also the support 38 can form a preassembly unit, this making assembly easier since the said cooling element, heating element and support can be fitted to the battery module 14 in one assembly step. In the process, provision may be made, in particular, for the support 38 to be coupled to the cooling element 24 by means of a clip connection, as a result of which the interposed heating element 26 is held in a secure manner.

Furthermore, the holding element 26, as illustrated in Figure 1, can be embedded in the support 38.

Figure 2 shows an alternative embodiment of the vehicle drive battery assembly 10 which exhibits a battery pack 12 comprising a total of six battery modules 14. The vehicle drive battery assembly 10 can in this case be divided into a first part 10a and a second part 10b which are each of different construction, as will be explained below. In this case, the separation into the two parts 10a, 10b is made on account of the cooling fluid main line 39 which is arranged in the centre of the vehicle drive battery assembly 10.

In this shown embodiment, the battery modules 14 are formed in some cases in groups of two and in some cases on their own.

In general, the heating device 22 and the cooling device 20 are matched to the arrangement of the battery modules 14, so that efficient heating and cooling of the battery modules 14 is possible.

By way of example, the group of two battery modules 14 interacts with a first heating device section 22a and a first cooling device section 20a in the first part 10a, whereas the battery module 14 which is formed on its own interacts with a second heating device section 22b and a second cooling device section 20b. The differences between the first and the second section 20a, 20b, 22a, 22b can be seen in this case from the number of cooling elements 24 and heating elements 26.

Eight cooling and, respectively, heating elements 24, 26 are in each case provided in the first heating device section 22a and in the first cooling device section 20a, wherein one heating element 26 is associated with each cooling element 24.

Only four heating and, respectively, cooling elements 26, 24 are in each case provided in the second heating device section 22b and, respectively, second cooling device section 20b, wherein one heating element 26 is again associated with each cooling element 24. The number of cooling and heating elements 24, 26 of the second section 20b, 22b is reduced in comparison to the first section 20a, 22a since the battery module 14 which is formed on its own has only half the area of the group of two.

Furthermore, it is clear from Figure 2, in particular from the second part 10b of the vehicle drive battery assembly 10, that the ratio of cooling element 24 to heating element 26 does not necessarily have to be 1:1, but rather can be variable. In this case, the ratio can be matched, in particular, to the temperatures which are typically to be expected since an excessive number of heating elements 26 is unnecessary in relatively warm regions. As a result, costs can be saved since only the heating elements 26 which are actually required are installed in the heating and cooling device 18.

The support 38, not illustrated here, can likewise also be used, in particular, in such a way that a support 38 supports only one cooling element 24.

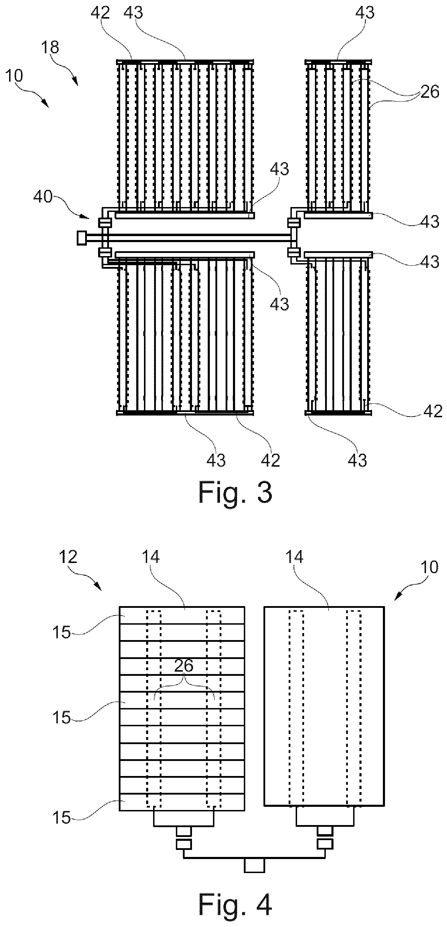

Figure 3 shows a schematic plan view of the device 18 from Figure 2, wherein the cooling fluid main line 39 is not illustrated. The electrical interconnection of the individual heating elements 26 is more clearly shown in this schematic illustration. The heating elements 26 are illustrated using dashed lines since they are situated beneath the cooling elements 24 in this view and are actually covered by said cooling elements.

A cable harness 40 is provided, this cable harness extending centrally through the vehicle drive battery assembly 10 analogously to the cooling fluid main line 39 and making contact with each of the individual heating elements 26 on a side which is directed towards the centre. The heating elements 26 are furthermore coupled to one another in pairs by means of U connections 42, so that all of the connections of the heating elements 26 lie on that side which is directed towards the cable harness 40. As a result, the outlay on cabling can be minimised, this firstly making assembly easier and secondly preventing unnecessary power losses on account of excessively high cable lengths.

In particular, this results in standardised interconnection of the vehicle drive battery assembly 10, this leading to a modular construction.

It is further clear from Figure 3 that the cooling elements 24 are coupled to collectors and distributors 43 at the ends, said collectors and distributors controlling the flow of cooling fluid through the individual cooling elements 24. The question of whether distributors or collectors are present depends on the direction of flow of the cooling fluid. Provision may be made, in particular, for mixer elements to be present, mixer elements being both collectors and also distributors, wherein the flow of cooling fluid is routed through inner walls in an appropriate manner.

In addition, it is clear from Figure 3 that the length and width of the cooling and heating elements 24, 26 can be exactly the same, so that the heating elements 26 extend over the entire first outer area 30 of the cooling elements 24, provided that a heating element 26 is provided on the corresponding cooling element 24.

Figure 4 shows a further embodiment of the vehicle drive battery assembly 10 which has a battery pack 12 comprising two battery modules 14 which are arranged next to one another, wherein, in the left-hand-side battery module 14, the battery cells 15 are schematically illustrated in the "jelly roll" design.

In each case two heating elements 26, which extend longitudinally over the battery modules 14, are associated with the two battery modules 14.

The individual battery cells 15 extend transverse to the orientation of the heating elements 26, this ensuring that the heating elements 26 interact with each individual battery cell 15. This guarantees that each of the battery cells 15 of a battery module 14 can be heated.

Since, as has already often been described, the heating elements 26 extend parallel to the cooling elements 24, the cooling elements 24 also make contact with each of the battery cells 15, this resulting in efficient cooling of all of the battery cells 15.

Since both the cooling areas 34, which are the bottom areas of the battery cells 15 in particular, and also the cooling elements 24 can be metallic and therefore have a high degree of thermal conductivity, it suffices for the cooling elements 24 to make contact with only one portion of the cooling areas 34. These partial areas or else cooling contact areas can have, in particular, an area of between 30% and 70% of the entire area 34.

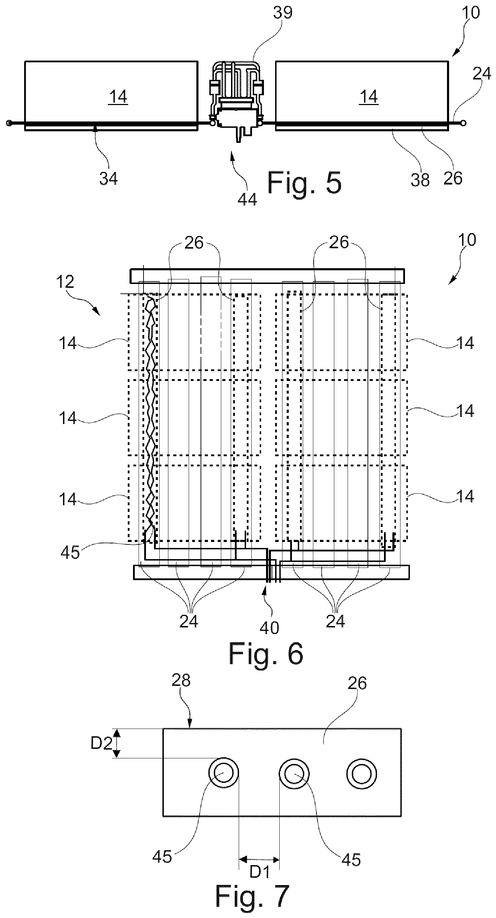

Figure 5 shows a vertical cross-sectional view through a fourth embodiment of the vehicle drive battery assembly 10, wherein two battery modules 14 which are arranged next to one another are shown.

A distributor unit 44 is located in the middle between the two battery modules 14, the said distributor unit conducting the cooling fluid via the cooling fluid main line 39 to the individual cooling elements 24 which bear against the cooling areas 34.

Figure 5 further clearly shows that the heating elements 26, the cooling elements 24 and the support 38 can form a flat preassembly unit which is arranged on the cooling areas 34.

Figure 6 shows a fifth embodiment of the vehicle drive battery assembly 10 which, in the shown embodiment, comprises a battery pack 12 comprising a total of six battery modules 14 which are illustrated using dashed lines.

In the shown embodiment, the cooling device 20 is formed by eight cooling elements 24, wherein four cooling elements 24 are associated with three battery modules 14.

Designing the cooling device 20 in this way results in the costs and also the outlay on assembly being further reduced since the cooling elements 24 interact with three battery modules 14 at the same time. The cooling elements 24 extend transverse to the longitudinal sides of the battery modules 14. The number of collectors and distributors 43 can likewise be lowered by virtue of this design.

Figure 6 further shows that the heating device 22 comprises four heating elements 26, wherein two heating elements 26 are associated with three battery modules 14. The number of connections of the heating elements 26 can also be lowered as a result.

The heating elements 26 are formed in such a way that they each have the two connection poles on one side, as a result of which a compact design of the cable harness 40 is possible. This simplifies assembly and additionally reduces the costs.

It can also be seen from Figure 6 that the heating elements 26 are in the form of resistance heaters since the profile of a heating wire 45 within the heating element 26 is schematically illustrated.

A heating element 26 which is in the form of a resistance heater is illustrated in cross section in Figure 7. The individual heating wires 45 are at a distance D1 from one another, wherein the heating wires 45 are at a distance D2 from the contact area 28. The flow of heat can be adjusted by a corresponding density of heating wires 45, in particular by the ratio D1/D2 being greater than 0.5 and less than 3. This guarantees uniform heat distribution over the contact area 28 and also the opposite area which can interact with the support 38, not illustrated here.

Figure 8 shows a seventh embodiment of the vehicle drive battery assembly 10 which is not according to the present invention, wherein the battery pack 12 comprises two battery modules 14 which are arranged opposite one another.

Both the cooling device 20, comprising two cooling elements 24, and also the heating device 22 are arranged between the two cooling areas 34 of the battery modules 14.

In the shown embodiment, the heating device 22 has two heating elements 26 which bear directly against the associated cooling area 34 by way of their respective contact area 28.

In the shown embodiment, the two heating elements 26 are, in particular, in the form of one unit which additionally comprises an interposed elastic material 46. The elastic material 46 can be an elastic foam material which can be compressed.

In the shown embodiment, provision can be made, in particular, for the two battery modules 14 to be pretensioned in relation to one another, so that the cooling elements 24 and also the heating element 26, which is in the form of a unit, are pressed between the respective cooling areas 34 of the battery modules 14. This results in good thermal contact between the cooling areas 34, this allowing efficient heating and, respectively, cooling of the individual battery cells 15.

In this embodiment, the two cooling elements 24 bear against a battery module 14, in particular the associated cooling area 34, in each case by way of their first and second outer areas 30, 32.

In one alternative, not illustrated here, a heating element 26 is interposed between two cooling elements 24 which bear against the contact areas 34 of the battery modules 14 in each case by way of their second outer areas 32, wherein a heating element 26 is mounted between the first outer areas 30 of the cooling elements 24 which are situated opposite one another. In this case, the battery modules 14 can be pretensioned in relation to one another in an analogous manner, so that the device 10 is held with pressing between the battery modules 14.

Therefore, the invention provides a heating and cooling device 18 and also a vehicle drive battery assembly 10 which provides efficient cooling and also efficient heating for the individual battery cells 15. Owing to the integration of the heating and cooling function within one device 18, a compact design is also possible, this lowering the costs and also the outlay on assembly.

It is possible to use the device according to the invention to heat or to cool the battery pack in such a way that a temperature difference of at most 5 K is present between two battery cells, irrespective of the position of the said battery cells in the battery module 14.

## Claims

1. Device (18) for heating and cooling a battery pack (12), in particular a vehicle drive battery pack comprising a plurality of battery cells, having a heating device (22) which comprises at least one heating element (26), and having a cooling device (20) which comprises at least one cooling element (24) through which a cooling fluid flows in order to carry away thermal energy, wherein the at least one heating element (26) bears directly against the cooling element (24) or directly against a side of the battery pack (12) against which the at least one cooling element (24) also bears, **characterised in that** the cooling element (24) and/or the heating element (26) are/is pressed against the battery pack (12) in a pretensioned manner, that the cooling element (24) and/or the heating element (26) are pressed against the battery pack (12) in a pretensioned manner by means of a pretensioning unit (36), in particular are pretensioned by means of a common spring element, wherein the cooling element (24) and/or the heating element (26) are/is arranged on a support (38) which interacts, in particular, with a pretensioning unit (36), the said support (38) being formed from a material which has a low heat transfer coefficient, the cooling element (24) having a plurality of canals (25), **characterized in that** the cooling element (24) being a plate-like part which is traversed by the canals (25).

2. Device (18) according to claim 1, **characterised in that** the heating element (26) is arranged between two cooling elements (24), in particular is coupled to two cooling elements (24).

3. Device (18) according to one of the preceding claims, **characterised in that** the heating element (26) and the cooling element (24) have the same length and/or width.

4. Device (18) according to one of the preceding claims, **characterised in that** the heating element (26) is an electrical heating element.

5. Vehicle drive battery assembly (10) comprising a battery pack (12) which has at least one battery module (14) comprising a plurality of battery cells (15), and comprising a heating and cooling device (18) according to one of the preceding claims.

6. Vehicle drive battery assembly (10) according to Claim 5, **characterised in that** the cooling element (24) and/or the heating element (26) are/is arranged in a manner pressed between two opposite sides (34) of two battery modules (14).

7. Vehicle drive battery assembly (10) according to Claim 5 or 6, **characterised in that** the heating element (26) is positioned between two cooling elements (24) which are provided on two opposite battery modules (14) .

8. Vehicle drive battery assembly (10) according to Claim 7, **characterised in that** the heating element (26) is arranged next to and between two cooling elements (24) which are laterally spaced apart, wherein the heating elements (26) and the cooling elements (24) are associated with the same side (34) of the battery module (14).

## Patentansprüche

1. Vorrichtung (18) zum Erwärmen und Kühlen eines Batteriepacks (12), insbesondere eines Fahrzeug-Antriebsbatteriepacks, der eine Mehrheit von Batteriezellen umfasst, eine Heizvorrichtung (22) aufweist, die mindestens eine Heizkomponente (26) umfasst, und eine Kühlvorrichtung (20) aufweist, die mindestens eine Kühlkomponente (24) umfasst, durch die ein Kühlfluid strömt, um Wärmeenergie abzuführen, wobei die mindestens eine Heizkomponente (26) direkt an der Kühlkomponente (24) oder direkt an einer Seite des Batteriepacks (12) anliegt, an dem die mindestens eine Kühlkomponente (24) ebenfalls anliegt, **dadurch gekennzeichnet, dass** die Kühlkomponente (24) und/oder die Heizkomponente (26) vorgespannt gegen den Batteriepack (12) gedrückt werden/wird, dass die Kühlkomponente (24) und/oder die Heizkomponente (26) mittels einer Vorspanneinheit (36) vorgespannt gegen den Batteriepack (12) gedrückt werden, wobei sie insbesondere mittels einer gebräuchlichen Federkomponente vorgespannt werden, wobei die Kühlkomponente (24) und/oder die Heizkomponente (26) auf einem Träger (38) angeordnet sind, der insbesondere mit einer Vorspanneinheit (36) zusammenwirkt, wobei der Träger (38) aus einem Material gebildet ist, das einen niedrigen Wärmeübergangskoeffizienten aufweist, wobei die Kühlkomponente (24) eine Mehrheit von Kanälen (25) aufweist, **dadurch gekennzeichnet, dass**
die Kühlkomponente (24) eine plattenartige Komponente ist, die von den Kanälen (25) durchzogen ist.

2. Vorrichtung (18) nach Anspruch 1, **dadurch gekennzeichnet, dass** die Heizkomponente (26) zwischen zwei Kühlkomponenten (24) angeordnet ist, wobei sie insbesondere mit zwei Kühlkomponenten (24) verbunden ist.

3. Vorrichtung (18) nach einem der vorausgehenden Ansprüche, **dadurch gekennzeichnet, dass** die Heizkomponente (26) und die Kühlkomponente (24) die gleiche Länge und/oder Breite aufweisen.

4. Vorrichtung (18) nach einem der vorausgehenden Ansprüche, **dadurch gekennzeichnet, dass** die Heizkomponente (26) eine elektrische Heizkomponente ist.

5. Fahrzeug-Antriebsbatterieanordnung (10), die einen Batteriepack (12) umfasst, der mindestens ein Batteriemodul (14) aufweist, das eine Mehrheit von Batteriezellen (15) umfasst, und die eine Heiz- und Kühlkomponente (18) nach einem der vorausgehenden Ansprüche umfasst.

6. Fahrzeug-Antriebsbatterieanordnung (10) nach Anspruch 5, **dadurch gekennzeichnet, dass** die Kühlkomponente (24) und/oder die Heizkomponente (26) zwischen zwei gegenüberliegende Seiten (34) von zwei Batteriemodulen (14) gedrückt sind/ist.

7. Fahrzeug-Antriebsbatterieanordnung (10) nach Anspruch 5 oder 6, **dadurch gekennzeichnet, dass** die Heizkomponente (26) zwischen zwei Kühlkomponenten (24) angeordnet ist, die auf zwei gegenüberliegenden Batteriemodulen (14) bereitgestellt sind.

8. Fahrzeug-Antriebsbatterieanordnung (10) nach Anspruch 7, **dadurch gekennzeichnet, dass** die Heizkomponente (26) neben und zwischen zwei Kühlkomponenten (24), die seitlich beabstandet sind, angeordnet ist, wobei die Heizkomponenten (26) und die Kühlkomponenten (24) der gleichen Seite (34) des Batteriemoduls (14) zugeordnet sind.

## Revendications

1. Dispositif (18) de chauffage et de refroidissement d'un bloc-batterie (12), en particulier d'un bloc-batterie d'entraînement de véhicule comprenant plusieurs éléments de batterie, ayant un dispositif de chauffage (22) qui comprend au moins un élément de chauffage (26), et ayant un dispositif de refroidissement (20) qui comprend au moins un élément de refroidissement (24) à travers lequel s'écoule un fluide de refroidissement pour extraire de l'énergie thermique, l'au moins un élément de chauffage (26) reposant directement contre l'élément de refroidissement (24) ou directement contre un côté du bloc-batterie (12) contre lequel repose également l'au moins un élément de chauffage (24), **caractérisé en ce que** l'élément de refroidissement (24) et/ou l'élément de chauffage (26) est/sont appuyé(s) contre le bloc-batterie (12) de manière précontrainte, **en ce que** l'élément de refroidissement (24) et/ou l'élément de chauffage (26) sont pressés contre le bloc-batterie (12) de manière précontrainte au moyen d'une unité de précontrainte (36), en particulier sont précontraints au moyen d'un élément ressort commun, l'élément de refroidissement (24) et/ou l'élément de chauffage (26) étant disposés sur un support (38) qui interagit, en particulier, avec une unité de précontrainte (36), ledit support (38) étant formé à partir d'un matériau qui a un faible coefficient de transfert thermique, l'élément de refroidissement (24) ayant une pluralité de canaux (25), **caractérisé en ce que** l'élément de refroidissement (24) est une pièce en forme de plaque qui est traversée par les canaux (25).

2. Dispositif (18) selon la revendication 1, **caractérisé en ce que** l'élément de chauffage (26) est disposé entre deux éléments de refroidissement (24), en particulier est accouplé à deux éléments de refroidissement (24).

3. Dispositif (18) selon l'une des revendications précédentes, **caractérisé en ce que** l'élément de chauffage (26) et l'élément de refroidissement (24) ont la même longueur et/ou largeur.

4. Dispositif (18) selon l'une des revendications précédentes, **caractérisé en ce que** l'élément de chauffage (26) est un élément de chauffage électrique.

5. Ensemble de batterie d'entraînement de véhicule (10) comprenant un bloc-batterie (12) qui a au moins un module de batterie (14) comprenant une pluralité d'éléments de batterie (15), et comprenant un dispositif de chauffage et de refroidissement (18) selon l'une des revendications précédentes.

6. Ensemble de batterie d'entraînement de véhicule (10) selon la revendication 5, **caractérisé en ce que** l'élément de refroidissement (24) et/ou l'élément de chauffage (26) est/sont disposé(s) de manière pressée entre deux côtés opposés (34) de deux modules de batterie (14).

7. Ensemble de batterie d'entraînement de véhicule (10) selon la revendication 5 ou 6, **caractérisé en ce que** l'élément de chauffage (26) est positionné entre deux éléments de refroidissement (24) qui sont disposés sur deux modules de batterie (14) opposés.

8. Ensemble de batterie d'entraînement de véhicule (10) selon la revendication 7, **caractérisé en ce que** l'élément de chauffage (26) est disposé à côté de et entre deux éléments de refroidissement (24) espacés latéralement, les éléments de chauffage (26) et les éléments de refroidissement (24) étant associés au même côté (34) du module de batterie (14).
